# EUROPÄISCHE PATENTSCHRIFT

(11) **EP 1 554 742 B1**
(45) Veröffentlichungstag und Bekanntmachung des Hinweises auf die Patenterteilung: **09.12.2009**
(21) Anmeldenummer: 03775050.2
(22) Anmeldetag: 07.10.2003
(51) Int. Cl.: H01H 33/66

(54) **HERSTELLUNG EINES FESTSTOFFISOLIERTEN SCHALTERPOLS**
PRODUCTION OF A CIRCUIT-BREAKER POLE, INSULATED BY A SOLID MATERIAL
PRODUCTION D'UN POLE DE DISJONCTEUR ISOLE A L'AIDE DE MATIERE SOLIDE

(30) Priorität: 21.10.2002 DE 10249615
(43) Veröffentlichungstag der Anmeldung: 20.07.2005
(73) Patentinhaber: SIEMENS AKTIENGESELLSCHAFT, 80333 München (DE)
(72) Erfinder: HERING, Uwe, 14195 Berlin (DE); VOLKMAR, Ralf-Reiner, 13353 Berlin (DE)
(86) Internationale Anmeldenummer: PCT/DE2003/003362
(87) Internationale Veröffentlichungsnummer: WO 2004/038748

(56) Entgegenhaltungen:
- DE-A- 19 712 182
- DE-U- 9 314 754
- GB-A- 1 030 798
- US-A- 4 568 804
- US-B1- 6 172 317

## Beschreibung

Die Erfindung betrifft ein Verfahren zur Herstellung eines feststoffisolierten Schalterpols mit wenigstens einer zum Einleiten einer Antriebsbewegung eingerichteten Antriebsöffnung, wobei der Schalterpol einen Schalter mit einem Schaltgehäuse, das eine von einer Schaltstange durchgriffene Antriebseite aufweist, und eine mit einem Anschlussteil versehene formstabile Ummantelung aus Isolierstoff aufweist, wobei das Schaltergehäuse mit Ausnahme der Antriebsseite und die mit dem Anschlussteil versehene Ummantelung einen Zwischenraum und eine Polsterung begrenzen, wobei
- der Schalter und die formstabile Ummantelung unabhängig voneinander hergestellt werden,
- der Schalter in der Ummantelung befestigt wird.

Ein solches Verfahren ist beispielsweise aus der US 6,172,317 B1 oder aus der US 4,568,804 A bekannt.

Die Erfindung betrifft ferner einen feststoffisolierten Schalterpol zum Unterbrechen eines elektrischen Stromes mit einer zum Einleiten einer Antriebsbewegung eingerichteten Antriebsöffnung, einem Schalter, der ein Schaltergehäuse aufweist, und einer aus einem Isolierstoff bestehenden und mit einem Anschlussteil versehenen Ummantelung, in welcher der Schalter befestigt ist, wobei ein zwischen der Ummantelung und dem Schaltergehäuse ausgebildeter Zwischenraum von einer Ausgleichsmasse ausgefüllt ist, so dass das Schaltergehäuse zumindest teilweise von der Ausgleichsmasse umgeben ist.

Ein weiteres Verfahren und ein weiterer Schalterpol sind aus der DE 197 12 182 A1 bereits bekannt. Nach dem vorbekannten Verfahren wird zunächst ein Vakuumschalter mit einem Vakuumgehäuse hergestellt. Das Vakuumgehäuse besteht aus einem hohlzylindrischen Keramikabschnitt der durch stirnseitige Metallwandungen gasdicht verschlossen ist. Im Inneren des Vakuumgehäuses ist ein Festkontakt und diesem axial gegenüberliegend ein Bewegkontakt angeordnet, wobei der Festkontakt fest mit einer der stirnseitigen Metallwandungen verbunden ist. Der Bewegkontakt ist von einer Schaltstange gehalten, welche die vom Festkontakt abgewandte stirnseitige Metallwandung durchgreift und zum Einleiten einer Antriebsbewegung einer Antriebseinheit vorgesehen ist.

Zur Herstellung der Feststoffisolierung des Schalterpols wird über den mit Anschlussteilen versehenen Schalter ein aus elastischem Kautschuk bestehender Schrumpfschlauch geschoben. Dabei wird der Schrumpfschlauch durch Kunststoffspiralen in einer zylindrischen Form gehalten, so dass sein Aufschieben über das zylindrische Vakuumgehäuse vereinfacht ist. Nach der Entfernung der Kunststoffspiralen legt sich der aus Ethylen-Propylen-Dien-Kautschuk bestehende Schlauch gleichmäßig an das Vakuumgehäuse an. Nach der Anbringung des Kautschuks wird der Vakuumschalter mit üblichen Druckgelierungsverfahren mit aromatischen oder zykloaliphatischen, gefüllten Epoxydharzen umgossen, wobei der Kautschuk die Abdichtung der Gussform zum Formkern übernimmt. Der Schrumpfschlauch wirkt als Ausgleichsmasse zum Ausgleich temperaturbedingter Volumenausdehnungen des Schalters, die zu unerwünschten Rissen in der Feststoffisolierung führen können.

Diesem Verfahren haftet der Nachteil an, dass die Feststoffisolierung nicht unabhängig von einem Schalter hergestellt werden kann. Nach Fertigstellung des Schalters muss der Schalter daher umständlich zum Herstellungsort der Feststoffisolierung transportiert werden. Dies wirkt sich insbesondere dann nachteilig aus, wenn die Herstellung der Feststoffisolierung in den Verantwortungsbereich eines Zulieferers fällt. Der Schalter muss dann in der Regel zunächst zum Zulieferer und dann mit Feststoffummantelung wieder zurück zum Schalterhersteller transportiert werden.

Aufgabe der Erfindung ist es daher, ein Verfahren der eingangs genannten Art bereitzustellen, mit dem ein Transport des Schalters zum Herstellungsort der Feststoffummantelung vermieden ist.

Aufgabe der Erfindung ist es ferner, einen feststoffisolierten Schalterpol der eingangs genannten Art bereitzustellen, der kostengünstig ist.

Die Erfindung löst diese Aufgabe bei einem Verfahren der eingangs erwähnten Art dadurch, dass
- zur Polsterung der Zwischenraum anschließend über wenigstens einen in der Ummantelung und/oder dem Anschlussteil vorgesehenen Vergusskanal mit der fluiden Ausgleichsmasse befüllt wird und die Ausgleichsmasse schließlich aushärtet.

Die Erfindung löst diese Aufgabe ausgehend von dem eingangs genannten Schalterpol dadurch, dass in der mit dem Anschlussteil versehenen Ummantelung ein Vergusskanal zur Herstellung der Ausgleichsmasse nach der Montage des Schalters vorgesehen ist.

Erfindungsgemäß können die formstabile Ummantelung und der zu isolierende Schalter unabhängig voneinander hergestellt werden. Erst nach der separaten Fertigstellung dieser Bauteile wird der Schalter in der Ummantelung befestigt. Dabei kann an der Ummantelung bereits ein Anschlussteil befestigt sein, das bei Betrieb des Schalterpols zum elektrischen Anschluss des Gesamtbauteils dient. Alternativ dazu ist es erfindungsgemäß möglich, das Anschlussteil erst bei der Montage des Schalters an der Ummantelung zu befestigen. Das Schaltergehäuse mit Ausnahme der Antriebsseite, das Anschlussteil und die Ummantelung sind in einer Weise passend zueinander zu dimensionieren, dass sie einen Zwischenraum begrenzen, der an das gesamte Schaltergehäuse mit Ausnahme der Antriebsseite angrenzt. Dieser Zwischenraum kann nun auf einfache Art und Weise beispielsweise durch Zuleitung eines in den Zwischenraum hineinragenden Schlauches mit der Ausgleichsmasse befüllt werden. Erfindungsgemäß kann auf diese Weise selbst ein Schalter, der von einer beweglichen Schaltstange durchgriffen wird, gepolstert werden, ohne dass es zu einer Beeinträchtigang der Antriebsbewegung der Schaltstange kommt. Dazu ist nur so viel fluide Ausgleichsmasse in den Zwischenraum einzufüllen, dass zumindest die Schaltstange frei von der Ausgleichsmasse bleibt. Der Zwischenraum sollte daher nur so weit befüllt werden, dass er nicht oder nur geringfügig überfüllt wird, so dass aus dem Zwischenraum austretende fluiden Ausgleichsmasse auf dem Weg zur Schaltstange hin verläuft und nicht an dieser aushärtet. Allerdings ist es erfindungsgemäß auch möglich, die Schaltstange mit Hilfe eines Formkragens vor Ausgleichsmasse zu schützen, die beim oder nach dem Befüllen aus dem Zwischenraum austritt. Anstelle einer Antriebsstange, die üblicherweise eine Hubbewegung ausführt, kann erfindungsgemäß auch eine rotierbare Schaltwelle zum Einleiten der Antriebsbewegung in das Schaltgehäuse eingesetzt werden.

Unter fluide ist im Sinne der Erfindung zu verstehen, dass die Ausgleichsmasse zumindest vor dem Aushärten bei der gewählten Herstellungstemperatur eine solche Viskosität aufweist, dass sie nach dem Einfüllen in den Zwischenraum über Fließprozesse zumindest teilweise ausfüllt. Je flüssiger oder fluider die Ausgleichsmasse ist, desto schneller ist der Herstellungsprozess. Das Einfüllen der fluiden Ausgleichsmasse muss jedoch so langsam und behutsam erfolgen, dass Luft- oder Gaseinschlüsse im Wesentlichen vermieden sind. Da der Zwischenraum offen liegt kann das beim Befüllen des Zwischenraumes verdrängte Gas über die Antriebsöffnung des Schalterpols zur Außenatmosphäre hin austreten.

Vorteilhafterweise werden als Ausgleichsmasse Elastomere eingesetzt, deren Polymerisierung oder Vernetzung noch nicht vollständig abgeschlossen ist. Im Rahmen der Erfindung ist es selbstverständlich auch möglich, zweckmäßige Monomere in den Zwischenraum einzufüllen und die Polymerisation erst anschließend durch geeignete chemische oder physikalische Initiatoren zu starten. Als Elastomer kommt beispielsweise Polyurethan in Betracht. In einem bevorzugten Ausführungsbeispiel ist die Ausgleichsmasse ein Kautschuk, insbesondere Silikonkautschuk. Im Rahmen der Erfindung ist auch der Einsatz von Ethylen-Propylen-Dien-Kautschuk (EPDM) möglich. Das Einfüllen von EPDM in den Zwischenraum muss jedoch bei höheren Temperaturen beispielsweise mittels eines Spritzgießverfahrens erfolgen. Vorteilhafterweise weist die Ausgleichsmasse eine gute Wärmeleitfähigkeit auf.

Als Isolierstoff zur Herstellung der formstabilen Ummantelung eignen sich nicht leitende Thermoplasten oder Duroplasten und insbesondere Harze, wie Epoxidharze.

Beim Befüllen des Zwischenraumes über einen Vergusskanal können in dem Zwischenraum befindliche Gase wie Luft gleichmäßig durch die Ausgleichsmasse verdrängt werden. Lufteinschlüsse in der aus der Ausgleichsmasse bestehenden Polsterung mit einer Herabsetzung der Kriechstrom- und Spannungsfestigkeit im Gefolge werden auf diese Weise vermieden. Der oder die Vergusskanäle sind im Vergleich zum Zwischenraum zweckmäßigerweise klein dimensioniert.

In einem diesbezüglichen Ausführungsbeispiel ist ein einziger Vergusskanal in dem Anschlussteil vorgesehen, das elektrisch leitend und daher üblicherweise aus einem Metall gefertigt ist. Das Anschlussteil weist daher eine gegenüber der Ummantelung erhöhte mechanische Festigkeit auf. Röhren oder Schläuche, die zum Zuführen der fluiden Ausgleichsmasse vorgesehen sind, können somit auf einfache Weise, beispielsweise durch Vorsehen eines zweckmäßigen Gewindes, an der metallischen Wandung des Vergusskanals befestigt werden. So kann auf dem Anschlussteil beispielsweise ein Richtungsventil aufgeschraubt werden, das den Durchtritt eines Fluids lediglich in eine Richtung erlaubt. Auch der Einsatz eines Druckventils ist erfindungsgemäß möglich.

Davon abweichend dazu kann ein Vergusskanal lediglich in der Ummantelung vorgesehen sein. Darüber hinaus ist es im Rahmen der Erfindung möglich Vergusskanäle sowohl in der Ummantelung als auch in dem Anschlussteil vorzusehen, wobei die in den jeweiligen Bauteilen eingebrachten Abschnitte jedes Vergusskanals ineinander münden, so dass der Zwischenraum von außen befüllbar ist.

Darüber hinaus ist es zweckmäßig, wenn jeder Vergusskanal beim Befüllen mit der fluiden Ausgleichsmasse unterhalb des Zwischenraumes angeordnet ist. Auf diese Weise wird die Gefahr von unerwünschten Lufteinschlüssen, welche die Spannungsfestigkeit der Feststoffisolierungen herabsetzten würden, noch weiter vermindert. Bei dieser Ausgestaltung kann die fluide Ausgleichsmasse langsam von unten nach oben steigend die Luft kontinuierlich aus dem Zwischenraum verdrängen.

Bei einer zweckmäßigen Weiterentwicklung der Erfindung wird in dem Zwischenraum beim Befüllen mit der fluiden Ausgleichsmasse ein Unterdruck erzeugt. Der Unterdruck beschleunigt einerseits den Füllprozess und dient darüber hinaus auch dazu, die Gefahr von Lufteinschlüssen zu verringern.

Weiterhin kann es zweckmäßig sein, dass die fluide Ausgleichsmasse unter Druck in den Zwischenraum eingeleitet wird. Die fluide Ausgleichsmasse kann dazu über geeignete Röhren oder Schläuche dem Zwischenraum zugeführt werden. Durch den Überdruck beim Einfüllen erhöht sich die Transportgeschwindigkeit des Fluids innerhalb dieses zuleitenden Röhrensystems, so dass der Herstellungsprozess auf diese Weise beschleunigt wird.

Bei einer Weiterentwicklung der Erfindung wird jeder Vergusskanal nach dem Befüllen verschlossen. Der Verschluss kann eine einfache Schraube sein, die beispielsweise nach dem Befüllen anstelle eines Ventils in ein Gewinde eingeschraubt wird, das in die Wandung des Vergusskanal eingebracht wurde.

Abweichend dazu wird jeder Vergusskanal durch einen Isolierstoff verschlossen.

Vorteilhafterweise wird das Anschlussteil bei der Herstellung der Ummantelung in dieses eingegossen. Durch diese formschlüssige Verbindung muss das Anschlussteil nicht aufwändig in der formstabilen Ummantelung, beispielsweise durch Verschrauben, Verkleben oder dergleichen, befestigt werden.

Weitere zweckmäßige Ausgestaltungen und Vorteile der Erfindung sind Gegenstand der nachfolgenden Beschreibung von Ausführungsbeispielen der Erfindung unter Bezug auf die Figuren der Zeichnung, wobei entsprechende Bauteile mit gleichen Bezugszeichen versehen sind und
- Figur 1: eine längs geschnittene Ansicht eines Ausführungsbeispiels, eines feststoffisolierten Schalterpols und
- Figur 2: ein weiteres Ausführungsbeispiel des erfindungsgemäßen feststoffisolierten Schalterpols in einer Längsschnittansicht zeigen.

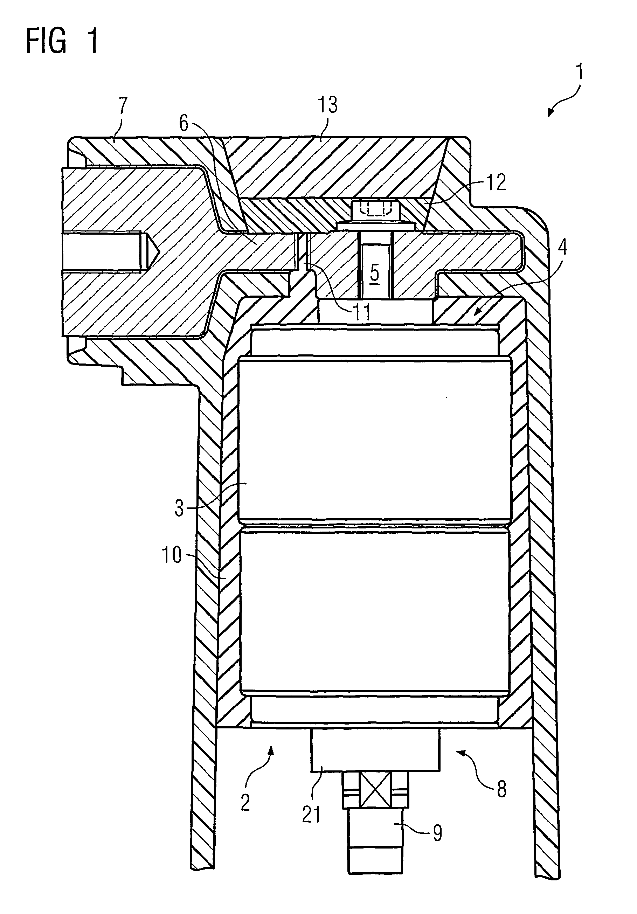

Figur 1 zeigt eine Längsschnittsansicht eines Ausführungsbeispiels des erfindungsgemäßen Schalterpols 1. Der dargestellte Schalterpol 1 weist als Schalter einen Vakuumschalter 2 mit einem Schaltergehäuse 3 auf. Das Schaltergehäuse 3 ist an einer Befestigungsseite 4 über eine Schraubverbindung 5 fest mit einem Anschlussteil 6 verbunden, das zum Anschluss des Schalterpols 1 an einen stromführenden nicht dargestellten Leiter vorgesehen ist. Dabei ist das Anschlussteil 6 formschlüssig mit einer Ummantelung 7 verbunden, die formstabil oder mit anderen Worten starr ausgebildet ist, um die zum Halten des Vakuumschalters 2 notwendige mechanische Festigkeit bereitzustellen. Ein diesen Anforderungen gerecht werdender Isolierstoff ist beispielsweise ein aromatischer oder zykloaliphatischer Epoxidharz. Im gezeigten Ausführungsbeispiel besteht die Ummantelung 7 aus Gießharz. Aus Figur 1 wird weiterhin deutlich erkennbar, dass der Schalterpol 1 durch das Anschlussteil 6 und der diesbezüglich formschlüssigen Ummantelung eine gekapselte Stirnseite ausgebildet. An seiner dem Anschlussteil 6 gegenüberliegenden Stirnseite weist der Schalterpol 1 eine Antriebsöffnung auf, über die das Einleiten einer Antriebsbewegung ermöglicht ist.

Der Vakuumschalter 2 ist mit einer Antriebsseite 8 versehen, die der Antriebsöffnung zugewandt ist und die von einer Schaltstange 9 durchgriffen wird. Die Schaltstange 9 ist gegenüber dem Schaltergehäuse 3 durch einen nicht gezeigten Metallfaltenbalg abgedichtet, so dass eine Hubbewegung der Schaltstange 9 ermöglicht ist. Durch diese Hubbewegung wird ein ebenfalls innerhalb des Schaltergehäuses 3 angeordneter Bewegkontakt in Kontakt mit einem Festkontakt gebracht. In dieser Kontaktstellung ist eine Stromführung über den Vakuumschalter 2 ermöglicht. Die Schaltstange 9 ist Teil eines Antriebsgestänges, das aus dem Schalterpol 1 über die Antriebsöffnung zu einem außerhalb des Schalterpols 1 angeordneten Antriebsmodul geführt wird.

Das vakuumdichte Schaltergehäuse 3 besteht üblicherweise aus einer rohrförmigen Keramik, die sowohl an der Befestigungsseite 4 als auch an der Antriebsseite 8 von metallischen Abdeckplatten dicht verschlossen ist. Unterschiedliche Temperaturausdehnungen dieses Verbundkörpers können zu Spannungen in der formstabilen Ummantelung 7 aus Gießharz und darüber hinaus sogar zu deren Zerstörung führen. Zum Auffangen dieser wärmebedingten Ausdehnungen ist zwischen der Ummantelung 7 und dem Schaltergehäuse 3 eine Ausgleichsmasse 10 vorgesehen. Der Vakuumschalter 2 ist daher, mit Ausnahme seiner Antriebsseite 8, vollständig von einem isolierenden Festkörper umgeben.

Zum Einführen der Ausgleichsmasse 10 ist bei dem gezeigten Ausführungsbeispiel ein Vergusskanal 11 in dem Anschlussteil 6 vorgesehen, wobei das Anschlussteil 6 an seiner vom Vakuumschalter 2 abgewandten Seite durch einen Elastomer 12, beispielsweise Silikonkautschuk, sowie einem weiteren formstabilen Kunststoff 13, beispielsweise Gießharz, nach außen elektrisch isoliert ist.

Zur Herstellung des Schalterpols 1 wird zunächst der Vakuumschalter 2 gefertigt. Unabhängig davon erfolgt die Herstellung der mit dem Anschlussteil 6 versehenen Ummantelung 7, wobei in diesem Fall das Anschlussteil 6 in den Isolierstoff der Ummantelung 7 eingegossen wurde. Der Vakuumschalter 2 kann nun durch die Schraubverbindung 5 an seiner Befestigungsseite 4 fest mit dem Anschlussteil 6 und damit fest mit der gesamten Ummantelung 7 verbunden werden. Das Zuführen der fluiden Ausgleichsmasse 10 erfolgt über den Vergusskanal 11, der in dem gezeigten Ausführungsbeispiel ein Gewinde aufweist, in das ein nicht dargestelltes mit Schlauch versehenes Richtungsventil eingeschraubt wird. Die fluide Ausgleichsmasse 10 besteht in dem gezeigten Ausführungsbeispiel ebenfalls aus Silikonkautschuk, das jedoch noch nicht vollständig ausgehärtet oder mit anderen Worten noch nicht vollständig vernetzt ist und somit eine ausreichend geringe Viskosität aufweist, um über die Schlauchverbindung durch das Ventil und den Vergusskanal 11 hindurch in den Zwischenraum zu fließen.

Beim Einfüllen der fluiden Ausgleichsmasse 10 ist der Schalterpol 1 zweckmäßigerweise umgekehrt zu der in Figur 1 gezeigten Darstellung ausgerichtet, so dass sich der Vergusskanal 11 unterhalb des Zwischenraumes befindet und die fluide Ausgleichsmasse 10 entgegen der Schwerkraft von unten nach oben steigt. Auf diese Weise wird die sich im Zwischenraum befindliche Luft langsam von unten nach oben verdrängt. Zur Beschleunigung des beschriebenen Füllprozesses sowie zur weiteren Verringerung der Gefahr von Lufteinschlüssen, kann die Ummantelung 7 an ihrer Antriebsöffnung verschlossen und in dem entstehenden Hohlraum ein leichter Unterdruck angelegt werden. Um ein Aushärten der Ausgleichsmasse 10 an der Schaltstange 9 zu verhindern, sollte grundsätzlich nur so viel fluide Ausgleichsmasse 10 eingefüllt werden, dass der Zwischenraum nahezu vollständig befüllt ist. Allenfalls ist ein geringfügiges Überfüllen möglich, so dass der überlaufende Anteil der Ausgleichsmasse 10 auf der Antriebsseite 8 des Vakuumschalters 2 verläuft. In dem gezeigten Ausführungsbeispiel ist jedoch ein Formkragen 21 zum Schutz der Schaltstange 9 vor aushärtender Ausgleichsmasse 10 vorgesehen. Mit Hilfe des Formkragens ist daher das Einbetten großer Teile der Antriebsseite 8 in die Ausgleichsmasse 10 ermöglicht.

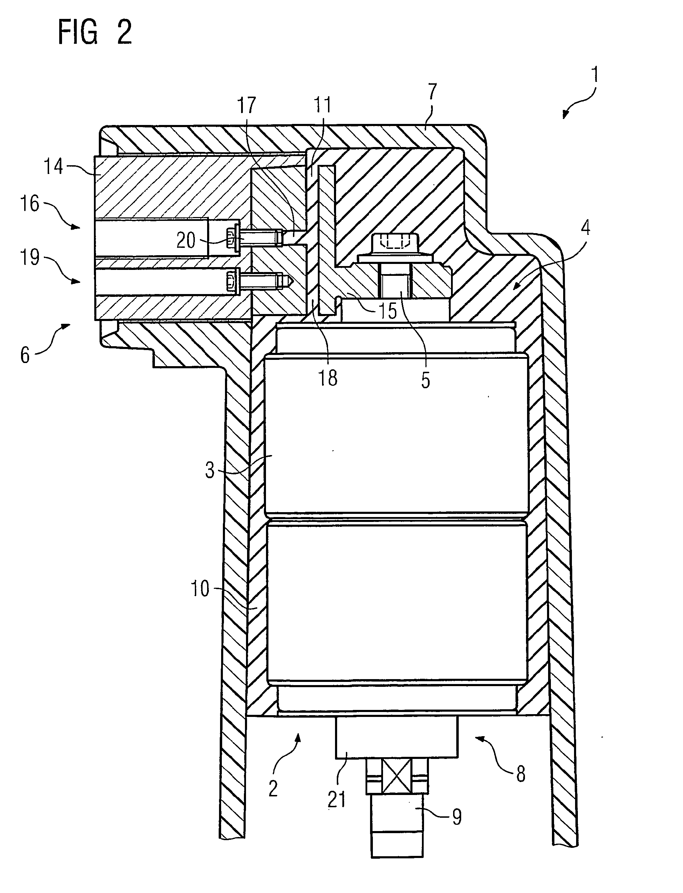

Figur 2 zeigt ein weiteres Ausführungsbeispiel des erfindungsgemäßen Schalterpols 1. Das hier gezeigte Anschlussteil 6 ist zweistückig ausgebildet und besteht aus einem aus der Ummantelung 7 stirnseitig herausgeführten Mundstück 14 und einem mit dem Vakuumschalter 2 mittels Schraubverbindung 5 verbundenen Befestigungsstück 15. Der Vergusskanal 11 ist in dem gezeigten Ausführungsbeispiel T-förmig ausgestaltet und weist einen in eine Anschlussöffnung 16 mündenden Außenkanal 17 sowie einen rechtwinklig dazu verlaufenden Innenkanal 18 auf. In dem Mundstück 14 ist ferner eine Befestigungsöffnung 19 erkennbar.

Die Herstellung des gezeigten Schalterpols 1 erfolgt wieder zunächst durch das unabhängige Herstellen der Ummantelung 7 sowie des Vakuumschalters 2, wobei die Ummantelung 7 nicht mit dem gesamten Anschlussstück 6 sondern lediglich zusammen mit dem Mundstück 14 durch Eingießen desselben in Gießharz gefertigt wird. An dem Vakuumschalter 2 wird über die Schraubverbindung 5 das Befestigungsstück 15 montiert. Anschließend werden die miteinander verbundenen Bauteile in den Hohlraum der Ummantelung 7 eingeführt. Die Befestigung des Vakuumschalters 2 an der Ummantelung 7 erfolgt über die in der Befestigungsöffnung 19 angeordnete Schraubverbindung. Nach Befestigung des Vakuumschalters 2 erfolgt das Zuführen der fluiden Ausgleichsmasse 10. Dazu wird eine zweckmäßige Rohr- oder Schlauchverbindung beispielsweise über ein Gewinde an den Außenkanal 17 des Vergusskanals 11 befestigt, wobei die Anschlussöffnung 16 den notwendigen Zugang von außen bereitstellt. Die fluide Ausgleichsmasse 10 wird anschließend über den Außenkanal 17, den Innenkanal 18 in den Zwischenraum gepumpt. Das Auffüllen des Schalterpols 1 kann wie bei dem vorhergehenden Ausführungsbeispiel von unten nach oben erfolgen bis der vorgesehene Füllpegel des Zwischenraumes erreicht ist. Ferner kann in dem Zwischenraum ein Unterdruck angelegt werden.

Nach dem Einfüllen mit der Ausgleichsmasse 10 wird der Vergusskanal 11 mittels einer Dichtungsschraube 20 verschlossen.

## Patentansprüche

1. Verfahren zur Herstellung eines feststoffisolierten Schalterpols (1) mit einer zum Einleiten einer Antriebsbewegung eingerichteten Antriebsöffnung, wobei der Schalterpol einen Schalter (2) mit einem Schaltergehäuse (3), das eine von einer Schaltstange (9) durchgriffene Antriebsseite (8) aufweist und eine mit einem Anschlussteil (6) versehene formstabile Ummantelung (7) aus Isolierstoff aufweist, wobei das Schaltergehäuse (3) mit Ausnahme der Antriebsseite (8) und die mit dem Anschlussteil (6) versehene Ummantelung (7) einen Zwischenraum mit einer Polsterung begrenzen, wobei
- der Schalter und die formstabile Ummantelung (7) unabhängig voneinander hergestellt werden,
- der Schalter (2) in der Ummantelung (7) befestigt wird
**dadurch gekennzeichnet, dass**
- zur Polsterung der Zwischenraum anschließend über wenigstens einen in der Ummantelung (7) und/oder dem Anschlussteil (6) vorgesehenen Vergusskanal (11) mit einer fluiden Ausgleichsmasse (10) befüllt wird und die Ausgleichsmasse (10) schließlich aushärtet.

2. Verfahren nach Anspruch 1,
**dadurch gekennzeichnet, dass**
jeder Vergusskanal (11) beim Befüllen mit der fluiden Ausgleichsmasse (10) unterhalb des Zwischenraumes angeordnet ist.

3. Verfahren nach einem der vorhergehenden Ansprüche,
**dadurch gekennzeichnet, dass**
in dem Zwischenraum beim Befüllen mit der fluiden Ausgleichsmasse (10) ein Unterdruck angelegt wird.

4. Verfahren nach einem der vorhergehenden Ansprüche,
**dadurch gekennzeichnet, dass**
die fluide Ausgleichsmasse (10) mit Druck in den Zwischenraum eingeleitet wird.

5. Verfahren nach einem der vorangehenden Ansprüche,
**dadurch gekennzeichnet, dass**
jeder Vergusskanal (11) nach dem Befüllen verschlossen wird.

6. Verfahren nach Anspruch 5,
**dadurch gekennzeichnet, dass**
jeder Vergusskanal (11) mit einem Isolierstoff (12, 13) verschlossen wird.

7. Verfahren nach einem der vorhergehenden Ansprüche,
**dadurch gekennzeichnet, dass**
das Anschlussteil (6) bei der Herstellung der Ummantelung (7)in diesen eingegossen wird.

8. Feststoffisolierter Schalterpol (1) zum Unterbrechen eines elektrischen Stromes mit einer zum Einleiten einer Antriebsbewegung eingerichteten Antriebsöffnung, einem Schalter (2), der ein Schaltergehäuse (3) aufweist, und einer aus einem Isolierstoff bestehenden und mit einem Anschlussteil (6) versehenen Ummantelung (7), in welcher der Schalter befestigt ist, wobei ein zwischen der Ummantelung (7) und dem Schaltergehäuse (3) ausgebildeter Zwischenraum von einer Ausgleichsmasse (10) ausgefüllt ist, so dass das Schaltergehäuse (3) zumindest teilweise von der Ausgleichsmasse (10) umgeben ist,
**dadurch gekennzeichnet, dass**
in der mit dem Anschlussteil (6) versehenen Ummantelung (7) ein Vergusskanal (11) zur Herstellung der Ausgleichsmasse (10) nach der Montage des Schalters (2) in der mit Anschlussteil (6) versehenen Ummantelung (7) vorgesehen ist.

## Claims

1. Method for producing a breaker pole (1) with solid-material insulation and having a drive opening which is provided for the purpose of introducing a drive movement, the breaker pole having a breaker (2) having a breaker housing (3), which has a drive side (8) through which a switching rod (9) passes, and a dimensionally stable sheath (7), which is made from insulating material and is provided with a connection part (6), the breaker housing (3) (with the exception of the drive side (8)) and the sheath (7) provided with the connection part (6) delimiting an intermediate space with a cushioning,
- the breaker and the dimensionally stable sheath (7) being produced independently of one another,
- the breaker (2) being fixed in the sheath (7),
**characterized in that**
- for the cushioning, the intermediate space is then filled with a fluid compensating compound (10) via at least one casting channel (11) provided in the sheath (7) and/or the connection part (6), and finally the compensating compound (10) cures.

2. Method according to Claim 1,
**characterized in that**
each casting channel (11) is arranged below the intermediate space when it is filled with the fluid compensating compound (10).

3. Method according to one of the preceding claims,
**characterized in that**
a vacuum is applied in the intermediate space when it is filled with the fluid compensating compound (10).

4. Method according to one of the preceding claims,
**characterized in that**
the fluid compensating compound (10) is introduced into the intermediate space under pressure.

5. Method according to one of the preceding claims,
**characterized in that**
each casting channel (11) is sealed after filling.

6. Method according to Claim 5,
**characterized in that**
each casting channel (11) is sealed with an insulating material (12, 13).

7. Method according to one of the preceding claims,
**characterized in that**
the connection part (6) is cast into the sheath (7) when the latter is produced.

8. Breaker pole (1) with solid-material insulation for the purpose of interrupting an electrical current having a drive opening which is provided for the purpose of introducing a drive movement, a breaker (2), which has a breaker housing (3), and a sheath (7), which is made of an insulating material, is provided with a connection part (6) and in which the breaker is fixed, an intermediate space formed between the sheath (7) and the breaker housing (3) being filled up by a compensating compound (10) such that the breaker housing (3) is at least partially surrounded by the compensating compound (10),
**characterized in that**
a casting channel (11) is provided in the sheath (7), which is provided with the connection part (6), for the purpose of producing the compensating compound (10) once the breaker (2) has been assembled in the sheath (7) which is provided with the connection part (6).

## Revendications

1. Procédé de fabrication d'un pôle ( 1 ) de disjoncteur isolé par de la matière solide et ayant une ouverture d'entraînement conçue pour déclencher un mouvement d'entraînement, le pôle de disjoncteur ayant un disjoncteur ( 2 ) à boîtier ( 3 ) qui a un côté ( 8 ) d'entraînement traversé par une barre ( 9 ) de commande et une enveloppe ( 7 ) en matière isolante, d'une forme stable, munie d'une partie ( 6 ) de connexion, le boîtier ( 3 ) du disjoncteur, à l'exception du côté ( 8 ) d'entraînement, et l'enveloppe ( 7 ) munie de la partie ( 6 ) de connexion délimitant un espace intermédiaire ayant un rembourrage, dans lequel
- on fabrique le disjoncteur et l'enveloppe ( 7 ) de forme stable indépendamment l'un de l'autre,
- on fixe le disjoncteur ( 2 ) dans l'enveloppe ( 7 ),
**caractérisé en ce que,**
- pour le rembourrage on emplit l'espace intermédiaire ensuite d'une composition ( 10 ) fluide de compensation par au moins un canal ( 11 ) de coulée prévu dans l'enveloppe ( 7 ) et/ou la partie ( 6 ) de connexion et on durcit finalement la composition ( 10 ) de compensation.

2. Procédé suivant la revendication 1,
**caractérisé en ce que** chaque canal ( 11 ) de coulée est disposé, lors du remplissage par la composition ( 10 ) fluide de compensation, en dessous de l'espace intermédiaire.

3. Procédé suivant l'une des revendications précédentes,
**caractérisé en ce que** l'on applique une dépression dans l'espace intermédiaire lors du remplissage par la composition ( 10 ) fluide de compensation.

4. Procédé suivant l'une des revendications précédentes,
**caractérisé en ce que** l'on introduit la composition ( 10 ) fluide de compensation sous pression dans l'espace intermédiaire.

5. Procédé suivant l'une des revendications précédentes,
**caractérisé en ce que** l'on ferme chaque canal ( 11 ) de coulée après le remplissage.

6. Procédé suivant la revendication 5,
**caractérisé en ce que** l'on ferme chaque canal ( 11 ) de coulée par une matière ( 12, 13 ) isolante.

7. Procédé suivant l'une des revendications précédentes,
**caractérisé en ce que** la partie ( 6 ) de connexion est, lors de la fabrication de l'enveloppe ( 7 ), coulée dans celle-ci.

8. Pôle ( 1 ) de disjoncteur isolé par de la matière solide, pour interrompre un courant électrique, comprenant une ouverture d'entraînement conçue pour déclencher un mouvement d'entraînement, un disjoncteur ( 2 ) qui a un boîtier ( 3 ) de disjoncteur, et une enveloppe ( 7 ) en une matière isolante est munie d'une partie ( 6 ) de connexion dans laquelle le disjoncteur est fixé, un espace intermédiaire formé entre l'enveloppe ( 7 ) et le boîtier ( 3 ) du disjoncteur étant rempli d'une composition ( 10 ) de compensation de sorte que le boîtier ( 3 ) du disjoncteur est entouré au moins en partie de la composition ( 10 ) de compensation,
**caractérisé en ce que**
il est prévu, dans l'enveloppe ( 7 ) munie de la partie ( 6 ) de connexion, un canal ( 11 ) de coulée pour la fabrication de la composition ( 10 ) de compensation après le montage du disjoncteur ( 2 ) dans l'enveloppe ( 7 ) munie de la partie ( 6 ) de connexion.
